(19) Europäisches Patentamt
European Patent Office
Office européen des brevets

(11) **EP 3 136 192 A1**

(12) **EUROPÄISCHE PATENTANMELDUNG**

(43) Veröffentlichungstag:
**01.03.2017 Patentblatt 2017/09**

(51) Int Cl.:
***G05B 19/4093*** *(2006.01)*

(21) Anmeldenummer: **15182171.7**

(22) Anmeldetag: **24.08.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Siemens Aktiengesellschaft**
**80333 München (DE)**

(72) Erfinder:
• **Hamm, Carsten**
  **91058 Erlangen (DE)**
• **Lorenz, Florian Nikolaus**
  **91056 Erlangen (DE)**

(54) **STEUERUNGSVERFAHREN FÜR DIE BEWEGUNG EINES WERKZEUGS UND STEUERUNGSVORRICHTUNG**

(57) Die Erfindung betrifft ein Steuerungsverfahren für die Bewegung eines Werkzeugs mit einer Werkzeugmaschine zur Erzeugung einer beliebigen Sollfläche durch Bearbeiten umfassend einer numerisch gesteuerten Werkzeugmaschine, wobei das numerische Bahnprogramm, welches die Bearbeitung des Werkstücks mit dem Werkzeug in den Bearbeitungspunkten beschreibt, zur Steuerung der Werkzugmaschine durch eine Steuervorrichtung erzeugt wird, und wobei die Bahn aus mehreren Stützpunkten und Einzelbahnen besteht und jede Einzelbahn ein Paar der Stützpunkte miteinander verbindet, und wobei die Steuerung der Werkzeugmaschine entsprechend der erzeugten Bahn erfolgt, das Bahnprogramm zur Steuerung der Werkzeugmaschine anhand eines geometrischen Qualitätskriteriums bewertet und ausgewählt wird, und wobei das geometrische Qualitätskriterium zumindest als ein Kriterium die Stetigkeit umfasst, so dass das Bahnprogramm die Bahn in Bezug auf die geometrische Beschaffenheit der Oberfläche des zu bearbeitenden Werkstücks erzeugt.

Weiterhin betrifft die Erfindung eine Steuerungsvorrichtung.

FIG 3

EP 3 136 192 A1

**Beschreibung**

Die Erfindung betrifft ein Steuerungsverfahren für die Bewegung eines Werkzeugs mit einer Werkzeugmaschine zur Erzeugung einer beliebigen Sollfläche durch Bearbeiten umfassend einer numerisch gesteuerten Werkzeugmaschine, wobei das numerische Bahnprogramm, welches die Bearbeitung des Werkstücks mit dem Werkzeug in den Bearbeitungspunkten beschreibt, zur Steuerung der Werkzeugmaschine durch eine Steuervorrichtung erzeugt wird, und wobei die Bahn aus mehreren Stützpunkten und Einzelbahnen besteht und jede Einzelbahn ein Paar der Stützpunkte miteinander verbindet, und wobei die Steuerung der Werkzeugmaschine entsprechend der erzeugten Bahn erfolgt. Weiterhin betrifft die Erfindung eine Steuerungsvorrichtung.

Werkstücke, die auf einer CNC-Maschine hergestellt werden sollen, werden zumeist im Computer-Aided Design (CAD) konstruiert. Beliebige Bauteile setzen sich oft aus einer größeren Zahl an Geometrie-Elementen zusammen. Die Übergänge werden nach Bedarf gestaltet und sind entweder geometrisch glatt oder explizit nicht glatt (Kanten, Ecken, Phasen etc.). Gerade bei der ersten Kategorie, nämlich dem geometrisch glatten Übergang, gibt es große Qualitätsunterschiede, die teilweise auf prinzipielle Schwächen der Software selber, teilweise auf falsche Bedienung, beispielsweise die Konstruktion des Werkstücks, zurückzuführen sind.

Für die maschinelle Fertigung wird die geometrische Beschreibung in den Schritten Computer-Aided Manufacturing (CAM) und Postprozessor (PP) in ein CNC-Bahnprogramm überführt. Das CNC-Bahnprogramm enthält in einer Bahnprogrammierung des Werkstücks neben notwendigen Steuerinformationen als wesentliche Information die Positionsbefehle für den Herstellungsprozess an der Werkzeugmaschine.

Im CAM wird die grundsätzliche Strategie zur Bearbeitung festgelegt, also in welcher Form und Abfolge das Werkzeug (z. B. Fräser) über das Material geführt wird. Dies kann z.B. mäander- oder spiral-förmig, etc. sein. Weiterentwicklungen erhöhen die Maschinenproduktivität durch Betrachtung der momentanen Span-Bildung. Eine höhere Ausbeute "Späne pro Vorschub", d. h. abgetragenes Volumen pro Werkzeugbahnlänge, erlangt man durch speziell generierte Werkzeugbahnen.

Der Erfindung liegt die Aufgabe zugrunde ein hinsichtlich Oberflächengüte und Bearbeitungsergebnis verbessertes Verfahren für eine Werkzugmaschine, insbesondere eine Fräsmaschine, anzugeben. Eine weitere Aufgabe liegt in der Angabe einer solchen Vorrichtung.

Die auf das Verfahren bezogene Aufgabe wird gelöst durch die Angabe eines Steuerungsverfahrens für die Bewegung eines Werkzeugs mit einer Werkzeugmaschine zur Erzeugung einer beliebigen Sollfläche durch Bearbeiten umfassend einer numerisch gesteuerten Werkzeugmaschine, wobei das numerische Bahnprogramm, welches die Bearbeitung des Werkstücks mit dem Werkzeug in den Bearbeitungspunkten beschreibt, zur Steuerung der Werkzeugmaschine durch eine Steuervorrichtung erzeugt wird, und wobei die Bahn aus mehreren Stützpunkten und Einzelbahnen besteht und jede Einzelbahn ein Paar der Stützpunkte miteinander verbindet, und wobei die Steuerung der Werkzeugmaschine entsprechend der erzeugten Bahn erfolgt, wobei das Bahnprogramm zur Steuerung der Werkzeugmaschine anhand eines geometrischen Qualitätskriteriums bewertet und ausgewählt wird, und wobei das geometrische Qualitätskriterium zumindest als ein Kriterium die Stetigkeit umfasst, so dass das Bahnprogramm die Bahn in Bezug auf die geometrische Beschaffenheit der Oberfläche des zu bearbeitenden Werkstücks erzeugt.

Die auf die Vorrichtung bezogene Aufgabe wird gelöst durch die Angabe der Steuerungsvorrichtung für die Bewegung eines Werkzeugs mit einer Werkzeugmaschine zur Erzeugung einer beliebigen Sollfläche durch Bearbeiten umfassend einer numerisch gesteuerten Werkzeugmaschine, wobei das numerische Bahnprogramm, welches die Bearbeitung des Werkstücks mit dem Werkzeug in den Bearbeitungspunkten beschreibt, zur Steuerung der Werkzugmaschine durch eine Steuervorrichtung erzeugbar ist, und wobei die Bahn aus mehreren Stützpunkten und Einzelbahnen besteht und jede Einzelbahn ein Paar der Stützpunkte miteinander verbindet, die Steuerung der Werkzeugmaschine entsprechend der erzeugten Bahn erfolgt, wobei das Bahnprogramm zur Steuerung der Werkzeugmaschine anhand eines geometrischen Qualitätskriteriums bewertbar und auswählbar ist, und wobei das geometrische Qualitätskriterium zumindest als ein Kriterium die Stetigkeit umfasst, so dass das Bahnprogramm die Bahn in Bezug auf die geometrische Beschaffenheit der Oberfläche des zu bearbeitenden Werkstücks erzeugbar ist.

Dabei bezieht sich ein Bahnprogramm auf verschiedenste Anwendungsbereiche. Eine Möglichkeit ist es, durch das Bahnprogramm mittels eines Werkzeuges eine Freiformfläche eines Körpers entstehen zu lassen. Der Körper kann dabei selbst auch bewegt sein, so dass der Bahnverlauf des Werkzeuges sich unterschiedlich zur Freiformfläche des Werkstücks bzw. zu den Konturen des Werkstücks ist. Ein Beispiel bei dem sich das Werkstück auch mit bewegt, findet sich bei Drehmaschinen. Bearbeitungsmaschinen, welche zumindest auch fräsen oder schleifen, sind auch mit Rotationsachsen ausführbar, wobei auch hier die erfindungsgemäßen Vorteile nutzbar sind. Auch kann die Erfindung bei der Laserbearbeitung/Laserschneiden und auftragenden Verfahren etc. einsetzbar sein.

Die CNC-Steuerung muss die generierte Bahn der Werkzeugmaschine abfahren. Oftmals weisen jedoch die Bahnen Merkmale auf, die aufgrund praktischer Einschränkungen nicht einwandfrei umgesetzt werden können.

Die Qualität des beim Abtrag tatsächlich hinterlassenen Schnittbildes hängt in großem Maß von der Qualität der Bahngeometrie und anderen Eigenschaften ab. Die Art, wie die Übergänge von einer Einzelbahn zur nächsten ausgeführt sind, bestimmt, ob die Maschine dem Übergang gut oder schlecht folgen kann. Die mathematisch relevanten Merkmale sind vor allem die Stetigkeit bzw. die Differenzierbarkeit der Einzelbahnabschnitte. Mit der Ordnung der Stetigkeit steigt die "Gutmütigkeit" der Bahn für das Abfahren durch eine CNC-gesteuerte Werkzeugmaschine.

Eine CNC-gesteuerte Werkzeugmaschine kann grundsätzlich alle Übergänge (irgendwie) anfahren. Je nach gewünschter Strategie kommt es dabei aber zu einem Verletzen der Geometrie, wie z. B. Verrunden oder Überschleifen, zu einer Variation der Dynamik wie z.B. Abbremsen oder Beschleunigen oder zu einer Kombination aus beidem. Erstes bedeutet Abstriche in der Oberflächengenauigkeit, zweites bedeutet Unruhe in der Maschinenbewegung und damit das Abbilden der Maschinendynamik auf dem Werkstück. Hier sind beispielsweise Schwingungen zu nennen. Erfindungsgemäß wird nun die generierte Bahn an der geometrischen Qualität, insbesondere der Oberfläche orientiert. Hierzu wird ein Qualitätskriterium benötigt, welches die Eigenschaften der Oberflächen bzw. der Bahnen zuverlässig, numerisch stabil und performant ermitteln kann. Zur Ermittlung eines Bewertungsmaßes wird zumindest das Kriterium der Stetigkeit herangezogen.

D.h. das Bahnprogramm zur Steuerung der Werkzeugmaschine wird erzeugt und anhand zumindest der Stetigkeit der durch das Bahnprogramm erzeugten Bahn bewertet und ausgewählt. Ein und dasselbe geometrische Feature kann dabei in einer Richtung durchlaufen stetig sein, und in einer anderen Richtung nicht. Es ergeben sich Vorzugsrichtungen für entsprechende Einzelbahnen. Die Einzelbahnen der Bearbeitung werden nun so gewählt, dass die ermittelten Vorzugsrichtungen möglichst genutzt werden, um das Werkstück zu fertigen.

Erfindungsgemäß wird daher eine differenzialgeometrische Eigenschaft der Werkstückoberfläche in die Bearbeitungsstrategie, insbesondere hier eine Frässtrategie einbezogen. Dies ermöglicht eine Frässtrategie die möglichst optimal von der Maschine abgefahren werden kann. Es entstehen Bahnen, die für die Verarbeitung in der CNC-Maschine besonders günstig sind, und die für die Maschinendynamik die wenigste Anregung bedeuten. Das Bearbeitungsergebnis ist mit Blick auf Oberflächengüte und -genauigkeit bestmöglich.

In den Unteransprüchen sind weitere vorteilhafte Maßnahmen aufgelistet, die beliebig miteinander kombiniert werden können, um weitere Vorteile zu erzielen.

Vorteilhafterweise werden mehrere Bahnprogramme zu einer vorgegebenen Sollfläche erzeugt und hinsichtlich des geometrischen Qualitätskriteriums bewertet und ausgewählt. Auch kann das geometrische Qualitätskriterium als zusätzliches Kriterium zudem die Tangentenstetigkeit (G1-Stetigkeit) umfassen. Zusätzlich kann das geometrische Qualitätskriterium als zusätzliches Kriterium zudem die Krümmungsstetigkeit (G2-Stetigkeit) umfassen.

Bevorzugt umfasst das geometrische Qualitätskriterium sowohl das Kriterium der Krümmungsstetigkeit als auch das Kriterium der Tangentenstetigkeit, wobei ein Kombinationstool das Bahnprogramm zur Steuerung der Werkzeugmaschine anhand einer geeigneten Kombination aus diesen Kriterien berechnet, bewertet und auswählt. Dies ist vor allem der Fall, wenn die Bahn abschnittsweise krümmungsstetig und tangentenstetig ist.

Das heißt, es erfolgt die Bahnprogrammierung des Werkstücks auf beliebigem Wege. Zwei (oder mehr) Varianten werden sodann hinsichtlich ihrer geometrischen Beschaffenheit analysiert und bewertet. Die jeweils besser geeignete erhält den Vorzug und wird zur Herstellung genutzt. Zur Ermittlung eines Bewertungsmaßes können dabei die verschiedenen Kriterien, d.h. Stetigkeit, G1-Stetigkeit und G2-Stetigkeit ausgerechnet und in geeigneter Weise, z.B. Mittelwert, Maximum, etc. kombiniert werden.

In einer bevorzugten Ausgestaltung umfasst das geometrische Qualitätskriterium zusätzlich als Kriterium noch die Charakteristika der Werkzeugmaschine. D.h. in die Bewertung gehen noch Charakteristika der konkreten Werkzeugmaschine ein, z.B. das unterschiedliche Dynamikvermögen einzelner Maschinenachse, ein. Die Bewertung eines Bahnprogramms kann für unterschiedliche Maschinen unterschiedliche Ergebnisse liefern. So lässt sich die günstigste Kombination aus Werkstück und Maschine finden. Weitere Charakteristika sind beispielsweise die minimale, mittlere und maximale Vorschubgeschwindigkeit, die während der Abarbeitung des Bahnprogramms auftritt, die minimalen, mittleren und maximalen Geschwindigkeiten der Maschinenachsen, die während der Abarbeitung des Bahnprogramms auftreten, die minimalen, mittleren und maximalen Achsenbeschleunigungen der Maschinenachsen, die während der Abarbeitung des Bahnprogramms auftreten, die minimale, mittlere und maximale Stromaufnahme (damit auch die Kraft- oder Momentaufnahme), die während der Abarbeitung des Bahnprogramms auftreten, die maximale Änderungsgeschwindigkeit (zeitliche Ableitung) der Stromaufnahme des Motors der jeweiligen Maschinenachse, die mittlere Spindeldrehzahl (Sollvorgabe und Istwert), die während der Abarbeitung des Bahnprogramms auftritt, das minimale, mittlere und maximale Moment der Spindel, die maximale Änderungsgeschwindigkeit (zeitliche Ableitung) des Spindelmoments als auch beispielsweise die Bearbeitungsdauer.

Selbstverständlich kann das geometrische Qualitätskriterium sowohl das Kriterium der Krümmungsstetigkeit und das Kriterium der Tangentenstetigkeit als auch das Kriterium der Charakteristika umfassen, wobei ein Kombinationstool das Bahnprogramm zur Steuerung der Werkzeugmaschine anhand einer geeigneten Kombination aus diesen Kriterien berechnet, bewertet und dann auswählt. Dadurch kann z.B. eine noch bessere Abarbeitung des Bahnprogramms erzielt werden, und/oder eine bessere Güte der zu erwartenden Oberfläche, und/oder eine geringe Arbeitszeit etc.. Dies ist vor allem für Bahnen relevant die abschnittweise krümmungsstetig oder tangentenstetig sind. Bevorzugt umfasst die Bahn verschiedene Einzelbahnen. Jede Einzelbahn wird nach dem geometrischen Qualitätskriterium bewertet.

Dabei können die Bewertungen der verschiedenen Einzelbahnen z.B. auch gewichtet werden, um ein geeignetes Bahnprogramm zu erstellen.

In einer bevorzugten Ausgestaltung ist das geometrische Qualitätskriterium die Krümmungsstetigkeit (G2-Stetigkeit) wobei die nach dem geometrischen Qualitätskriterium ausgewählte Einzelbahn eine Vorzugsrichtung ausweist. Die Bahn wird nun in bevorzugter Ausgestaltung nach den Vorzugsrichtungen der Einzelbahnen ausgewählt.

Erfindungsgemäß wird einem ersten Schritt die Werkstückgeometrie hinsichtlich ihrer differenzialgeometrischen Beschaffenheit analysiert und bewertet. Ein und dasselbe geometrische Feature kann dabei in einer Richtung durchlaufen G2-stetig sein, und in einer anderen Richtung nicht. Es ergeben sich Vorzugsrichtungen für entsprechende Einzelbahnen. In einem zweiten Schritt werden die Einzelbahnen der Bearbeitung nun so gewählt, dass die ermittelten Vorzugsrichtungen möglichst genutzt werden, um das Werkstück zu fertigen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:

FIG 1:     Beispiele für Fräsbahnen nach dem Stand der Technik generiert,

FIG 2:     ein Beispiel für eine technologie-optimierte Fräsbahn,

FIG 3:     ein Beispiel für zwei Bahnen über einen konstruierten Flächenübergang,

FIG 4:     eine Auswertung der G2-Stetigkeit in einem Punkt,

FIG 5:     die Krümmungsänderungen an dem Werkstück selber,

FIG 6:     ein dreidimensionales Istwerkstück,

FIG 7:     die mäanderförmige Fräsbahn 12 für das Istwerkstück nach dem Stand der Technik,

FIG 8:     Erfindungsgemäße Fräsbahn mit Vorzugseinzelbahnen 13 gemäß der Erfindung.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

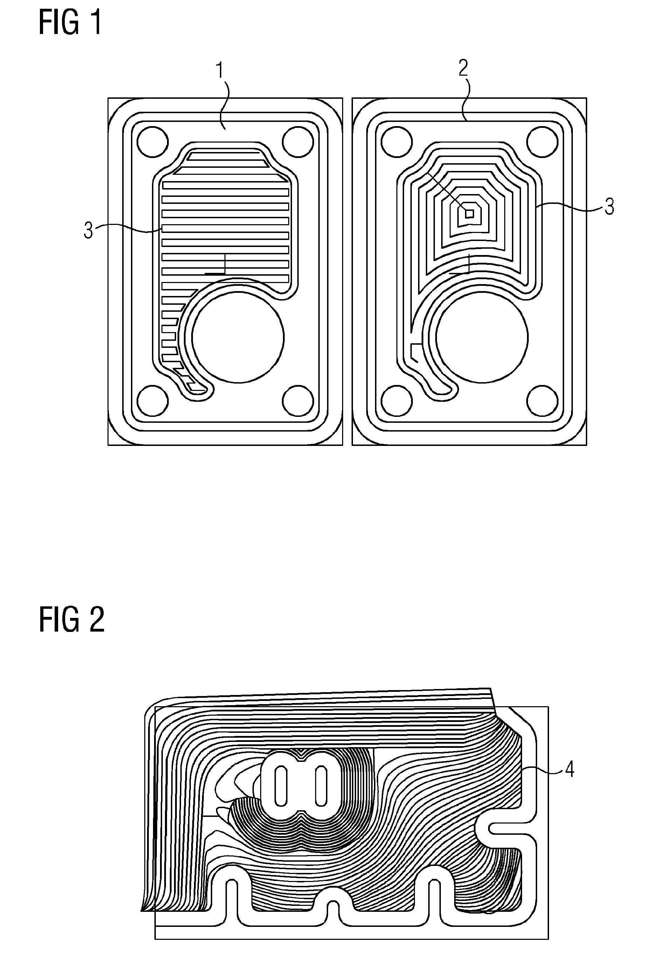

Im CAM wird die grundsätzliche Strategie zur Bearbeitung festgelegt, also in welcher Form und Abfolge das Werkzeug (z. B. Fräser) über das Material geführt wird. Typische Beispiele sind in FIG 1, links die Mäander 1 ("zig", "zig-zag") oder FIG 1, rechts die Spiralen 2. Die CNC-Steuerung an der Werkzeugmaschine muss dann die generierte Bahn 3 abfahren. Oftmals weisen die Bahnen 3 Merkmale auf, die aufgrund praktischer Einschränkungen nicht einwandfrei umgesetzt werden können.

Weiterentwicklungen erhöhen die Maschinenproduktivität durch Betrachtung der momentanen Span-Bildung. Eine höhere Ausbeute "Späne pro Vorschub" (d. h. abgetragenes Volumen pro Werkzeugbahnlänge) erlangt man durch speziell generierte Werkzeugbahnen. FIG 2 zeigt ein Beispiel für eine technologie-optimierte Fräsbahn 4, welche mittels einer Standardsoftware erzeugt wurde.

Die vorliegende Erfindung beschreibt ein neuartiges Konzept zur Wahl von Fräsbahnen. Dieses ist geometrisch motiviert und erlaubt das optimale Abfahren durch die NC-gesteuerte Werkzeugmaschine.

Es wurde erkannt, dass die Qualität des beim Abtrag tatsächlich hinterlassenen Schnittbildes in großem Maß von der Qualität der Bahngeometrie abhängt. Die Art, wie die Übergänge von einer Einzelbahn zur nächsten Einzelbahn ausgeführt sind, bestimmt, ob die Maschine dem Übergang gut oder schlecht folgen kann. Die mathematisch relevanten Merkmale sind die Stetigkeit bzw. die Differenzierbarkeit der Einzelbahnen bzw. der Bahnabschnitte. Dabei baut die Stetigkeits-Ordnung logisch aufeinander auf. Eine Stufe setzt die jeweils niedrigere voraus, d.h. die G1-Stetigkeit erfordert zwingend die G0Stetigkeit. Mit der Ordnung der Stetigkeit steigt die "Gutmütigkeit" der Bahn für das Abfahren durch eine CNC-gesteuerte Werkzeugmaschine:

-     G0-stetig: die Einzelbahnen schließen geometrisch aneinander an, d. h. es gibt zwischen dem Ende der vorigen Einzelbahn und dem Anfang der nächsten Einzelbahn keinen Versatz. Der Übergang darf aber sehr wohl einen Knick (Änderung der Richtung) aufweisen.

-     G1-stetig: die Einzelbahnen schließen "tangentenrichtig" aneinander an, d. h. die Richtung des vorigen Abschnitts und die Richtung des folgenden Abschnitts stimmen überein. Ein solcher Übergang kann ohne Änderung der Geschwindigkeit abgefahren werden.

- G2-stetig: die Einzelbahnen schließen "krümmungsrichtig" aneinander an, d. h. die Krümmung des vorigen Abschnitts und die Krümmung des folgenden Abschnitts stimmen überein. Eine solche Bahn kann ohne Änderung der Beschleunigung abgefahren werden.

Erfindungsgemäß wird nun die Bahn, anhand der geometrischen Qualität der Oberfläche bewertet und ausgewählt. Dazu werden die Eigenschaften der Oberfläche in Bezug auf die Bahnen zuverlässig, numerisch stabil und performant ermitteln.

Hierfür wird ein Bahnprogramm, welches die Bahn in Bezug auf die geometrische Beschaffenheit der Oberfläche des zu bearbeitenden Werkstücks beschreibt, erzeugt und anschließend anhand des geometrischen Qualitätskriteriums bewertet und ausgewählt, wobei das geometrische Qualitätskriterium zumindest als ein Kriterium die Stetigkeit umfasst.

Erfindungsgemäß erfolgt die Bahnprogrammierung des Werkstücks auf beliebigem Wege. Zwei oder mehr Varianten werden sodann hinsichtlich ihrer geometrischen Beschaffenheit analysiert und bewertet. Die jeweils besser geeignete erhält den Vorzug und wird zur Herstellung genutzt. Zur Ermittlung eines Bewertungsmaßes können die Kriterien der Stetigkeit, Tangentenstetigkeit, Krümmungsstetigkeit kombiniert, ausgerechnet und in geeigneter Weise, z. B. Mittelwert, Maximum, kombiniert werden.

Auch können in das geometrische Qualitätskriterium noch Charakteristika der konkreten Werkzeugmaschine eingehen, z. B. das unterschiedliche Dynamikvermögen einzelner Maschinenachsen. Die Bewertung eines Bahnprogrammes kann daher für unterschiedliche Maschinen unterschiedliche Ergebnisse liefern. So lässt sich die günstigste Kombination aus Werkstück und Maschine finden.

Auch kann z.B. als geometrisches Qualitätskriterium nur die G2-Stetigkeit in Betracht gezogen werden. Hier wird in einem ersten Schritt wird die Werkstückgeometrie hinsichtlich ihrer differenzialgeometrischen Beschaffenheit analysiert und bewertet. Ein und dasselbe geometrische Feature kann in einer Richtung durchlaufen G2-stetig sein und in einer anderen Richtung nicht. Es ergeben sich daher Vorzugsrichtungen für entsprechende Einzelbahnen. In einem zweiten Schritt werden die Einzelbahnen der Bearbeitung nun so gewählt, dass die ermittelten Vorzugsrichtungen möglichst genutzt werden, um das Werkstück zu fertigen.

Ein Bahnprogramm setzt sich stets aus einer Abfolge an Einzelbahnen zusammen. Diese ergeben in Summe die gesamte Fertigungsaufgabe, sprich die zu fertigende Geometrie. Der Stand der Technik kennt diverse Strategien, wie die im CAD konstruierte Geometrie mit Einzelbahnen herzustellen ist. Es ist bislang nicht bekannt, differenzialgeometrische Eigenschaften der Werkstückoberfläche in die Frässtrategie einzubeziehen. Dies ermöglicht eine Frässtrategie, die möglichst optimal von der Maschine abgefahren werden kann. Es entstehen Bahnen, die für die Verarbeitung in der NC besonders günstig sind, und die für die Maschinendynamik die wenigste Anregung bedeuten. Das Bearbeitungsergebnis ist mit Blick auf Oberflächengüte und -genauigkeit bestmöglich.

Nachfolgend sollen beispielhaft Algorithmen zur Bestimmung der differenzialgeometrischen Eigenschaften einer Fläche näher beschrieben werden, anhand derer ein solches Bahnprogramm erstellt werden kann.

Dazu ist ein Flächenübergang (nicht gezeigt) durch einen "letzten" Punkt p1 auf einer ersten Fläche F und einen "ersten" Punkt p2 auf einer zweiten Fläche G gekennzeichnet (nicht gezeigt). Um einen Flächenübergang differenzialgeometrisch zu klassifizieren, ist es notwendig die entsprechenden Punkte p1, p2 beider Flächen F, G zu betrachten. Diese erhält man z. B. durch den Schnitt beider Flächen F, G mit einer Hilfsebene, die sich aus der momentanen Fräsrichtung und der Flächennormalen ergibt.

G0-Stetigkeit: Um auf G0-Stetigkeit zu prüfen, wird die Norm der Differenz beider Punkte, d.h. Vektoren im R_3 betrachtet. Es gilt:

$$|p_1 - p_2| < \varepsilon$$

Liegt der Abstand beider Punkte p1, p2 unterhalb einer Schwelle $\varepsilon$, so kann der Übergang als G0-stetig angesehen werden.

Die G1-Stetigkeits-Prüfung setzt G0-Stetigkeit voraus, daher kann im Folgenden ohne Beschränkung der Allgemeinheit von

$$p1 = p2 = p$$

ausgegangen werden. Damit ein Flächenübergang in einem Punkt p G1-stetig ist, müssen die entsprechenden Tangentialebenen der Flächen F und G identisch sein. Jede der beiden Flächen F, G besitzt im Punkt P jeweils zwei Ableitungsvektoren, nämlich jeweils die erste Ableitung in Parameterrichtung, die die Tangentialebene aufspannen, und die aufgrund von verschiedenen Parametrisierungen der Flächen F und G in Länge und Richtung stark variieren können. Die beiden Ableitungsvektoren bilden die sogenannte Jacobi-Matrix J. Es bleibt also zu prüfen, ob es eine Möglichkeit gibt, das Vektorenpaar der ersten Fläche JF auf das Vektorenpaar der zweiten Fläche JG zu transformieren. Eine solche Transformation X heißt auch lokale Reparametrisierung. Gibt es eine solche lokale Reparametrisierung X, dann sind die Tangentialebenen automatisch identisch. Dies ist der Fall, wenn:

$$|J_F - J_G X| < \varepsilon$$

Normiert man vor der linearen Ausgleichsrechnung die Spalten beider Jacobi-Matrizen, kann anhand der 2-Norm (größter Singulärwert) des Fehlers aus der Matrix X der Winkel $\alpha$ zwischen den beiden Flächennormalen wie folgt bestimmt werden:

$$(\alpha = \arcsin |J_F - J_G X|)$$

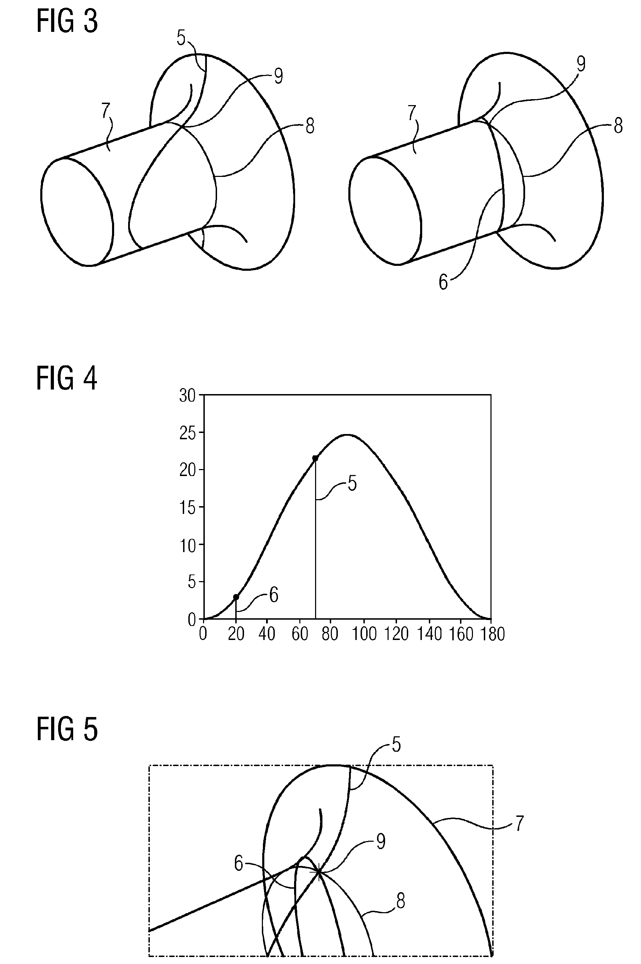

Die G2-Stetigkeits-Prüfung setzt G1-Stetigkeit voraus. Während dem Richtungsbegriff im Zusammenhang mit der G1-Stetigkeit keinerlei Bedeutung zukommt (entweder gibt es am Flächenübergang einen Knick, dann aber in jeder Richtung über dem Punkt oder es besteht Glattheit), spielt er bei der Betrachtung der G2-Stetigkeit eine zentrale Rolle. Vergleicht man zwei potentielle Bahnen, die einen gemeinsamen Punkt auf dem Flächenübergang besitzen, wird das Konzept der Richtungs-G2-Stetigkeit in FIG 3 verdeutlicht.

In FIG 3 werden zwei potentielle Bahnen auf einem Werkstück 7, nämlich eine erste Bahn als Kurve 5 und eine zweite Bahn als Kurve 6, die einen gemeinsamen Punkt 9 auf dem Flächenübergang 8 besitzen, verglichen. Während das Vorzeichen der Krümmung auf der Kurve 5 in FIG 3 am Flächenübergang 8 wechselt und damit die Krümmung einen starken Sprung aufweist, ist die Änderung der zweiten Ableitung der Kurve 6 sehr gering und kaum sichtbar. Die berechnete Reparametrisierung aus der G1-Stetigkeit taucht auch beim Vergleich der zweiten Ableitung wieder auf. Eine G2-Stetigkeit liegt vor, wenn

$$|y^T (H_F - X^T H_G X + J_F \lambda)y| < \varepsilon \quad mit\ \lambda\ reeler\ Eintrag\ Parameter$$

und wobei $y \in \mathbb{R}\,2$ eine Richtung auf der Tangentialebene und H die sog. Hessematrix (= zweite Ableitungen) sind. Alle vorgestellten Verfahren basieren auf der Berechnung der Moore-Penrose-Inversen, für die zahlreiche numerisch stabile Verfahren bekannt sind. Als Resultat erhält man für jede Richtung einen Wert für den Krümmungssprung. Dies ist in FIG 4 gezeigt.

FIG 4 zeigt das Maß der Krümmungsänderung (x-Achse) beim Übergang von F nach G im Punkt 9. Beim Vergleich der Kurve 6 mit der Kurve 5 erkennt man, dass die Kurve (Bahn) 6 den deutlich kleineren Krümmungssprung enthält. Zudem ist in FIG 4 ein Maximum bei 90° zu erkennen, das zudem darauf hinweist, dass in dieser Richtung (90°) der Krümmungssprung am stärksten ausgeprägt wäre. Dies wird in der FIG 5 nochmal verdeutlicht. Somit würde eine Bearbeitung hinsichtlich der Kurve 5 gewählt werden.

Aus der FIG 4 und der FIG 5 ist auch zu erkennen dass jeder beliebige Winkel zwischen 0° und 180° möglich ist, je nach Bahnprogramm und abgefahrener Bahn bzw. Einzelbahn.

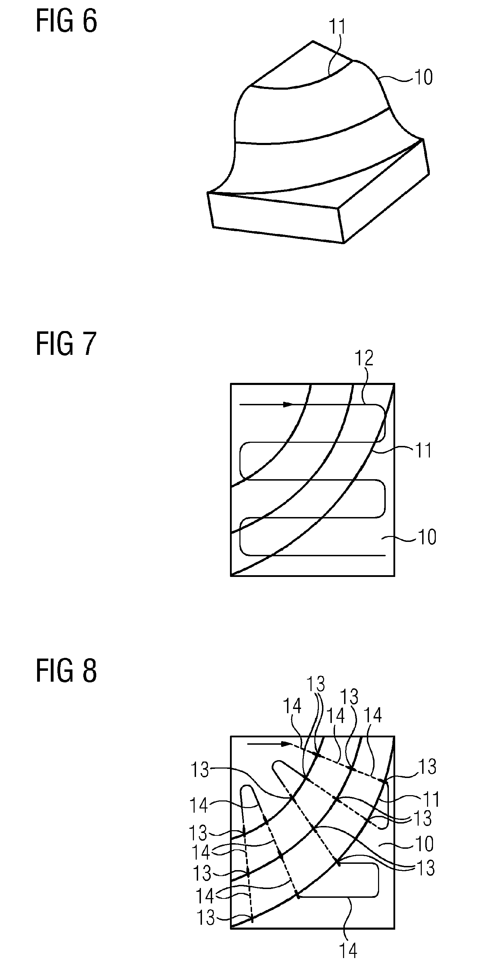

Die Figuren 6-8 zeigen die Erfindung an einem weiteren Beispiel. Hier wurde als geometrisches Qualitätskriterium die G2-Stetigkeit gewählt.

FIG 6 zeigt beispielhaft ein 3-dimensionales Ist-Werkstück 10 mit Kanten 11. Eine Bearbeitungsstrategie nach dem Stand der Technik würde die in FIG 7 gezeigte, mäanderförmige Fräsbahn 12 erzeugen.

FIG 8 zeigt die erfindungsgemäß ermittelten Vorzugsrichtungen für Einzelbahnen, nachfolgend auch als Vorzugseinzelbahnen 13 bezeichnet, für die Bearbeitung. Dabei sind die Vorzugsrichtungen immer senkrecht zu einer Kante 11 des Ist-Werkstücks 10. Die Verbindungseinzelbahnen 14 verbinden die jeweiligen Vorzugseinzelbahnen 13 in geeigneter Art und Weise. Krümmungssprünge bei der Bearbeitung dieses Ist-Werkstücks 10 sind jedoch nicht zu vermeiden. Durch die erfindungsgemäße Ermittlung der Vorzugseinzelbahnen 13 weisen die Verbindungseinzelbahnen 14/Vorzugseinzelbahnen 13 zumindest eine gleiche Krümmungscharakteristik auf. Dadurch entsteht ein gleichartiges Fräsbild.

**Patentansprüche**

1. Steuerungsverfahren für die Bewegung eines Werkzeugs mit einer Werkzeugmaschine zur Erzeugung einer beliebigen Sollfläche durch Bearbeiten, umfassend einer numerisch gesteuerten Werkzeugmaschine, wobei das numerische Bahnprogramm, welches die Bearbeitung des Werkstücks mit dem Werkzeug in den Bearbeitungspunkten beschreibt, zur Steuerung der Werkzeugmaschine durch eine Steuervorrichtung erzeugt wird, und wobei die Bahn aus mehreren Stützpunkten und Einzelbahnen besteht und jede Einzelbahn ein Paar der Stützpunkte miteinander verbindet, und wobei die Steuerung der Werkzeugmaschine entsprechend der erzeugten Bahn erfolgt, **dadurch gekennzeichnet, dass** das Bahnprogramm zur Steuerung der Werkzeugmaschine anhand eines geometrischen Qualitätskriteriums bewertet und ausgewählt wird, und wobei das geometrische Qualitätskriterium zumindest als ein Kriterium die Stetigkeit umfasst, so dass das Bahnprogramm die Bahn in Bezug auf die geometrische Beschaffenheit der Oberfläche des zu bearbeitenden Werkstücks erzeugt.

2. Steuerungsverfahren für die Bewegung eines Werkzeugs mit einer Werkzeugmaschine nach Anspruch 1, **dadurch gekennzeichnet, dass** mehrere Bahnprogramme zu einer vorgegebenen Sollfläche erzeugt werden und hinsichtlich des geometrischen Qualitätskriteriums bewertet und ausgewählt werden.

3. Steuerungsverfahren für die Bewegung eines Werkzeugs mit einer Werkzeugmaschine nach Anspruch 1 oder 2, **dadurch gekennzeichnet, dass** das geometrische Qualitätskriterium als zusätzliches Kriterium zudem die Tangentenstetigkeit (G1-Stetigkeit) umfasst.

4. Steuerungsverfahren für die Bewegung eines Werkzeugs mit einer Werkzeugmaschine nach Anspruch 3, **dadurch gekennzeichnet, dass** das geometrische Qualitätskriterium als zusätzliches Kriterium zudem die Krümmungsstetigkeit (G2-Stetigkeit) umfasst.

5. Steuerungsverfahren für die Bewegung eines Werkzeugs mit einer Werkzeugmaschine nach Anspruch 4, **dadurch gekennzeichnet, dass** das geometrische Qualitätskriterium sowohl das Kriterium der Krümmungsstetigkeit als auch das Kriterium der Tangentenstetigkeit umfasst, wobei ein Kombinationstool das Bahnprogramm zur Steuerung der Werkzeugmaschine anhand einer geeigneten Kombination aus diesen Kriterien berechnet, bewertet und auswählt.

6. Steuerungsverfahren für die Bewegung eines Werkzeugs mit einer Werkzeugmaschine nach einem der vorhergehenden Ansprüche, **dadurch gekennzeichnet, dass** das geometrische Qualitätskriterium zusätzlich als Kriterium noch die Charakteristika der Werkzeugmaschine umfasst.

7. Steuerungsverfahren für die Bewegung eines Werkzeugs mit einer Werkzeugmaschine nach Anspruch 4 und Anspruch 6, **dadurch gekennzeichnet, dass** das geometrischen Qualitätskriterium sowohl das Kriterium der die Krümmungsstetigkeit und das Kriterium der Tangentenstetigkeit als auch das Kriterium der Charakteristika umfasst, wobei ein Kombinationstool das Bahnprogramm zur Steuerung der Werkzeugmaschine anhand einer geeigneten Kombination aus diesen Kriterien berechnet, bewertet und auswählt.

8. Steuerungsverfahren für die Bewegung eines Werkzeugs mit einer Werkzeugmaschine nach einem der vorhergehenden Ansprüche, **dadurch gekennzeichnet, dass** die Bahn verschiedene Einzelbahnen umfasst und jede Einzelbahnen nach dem geometrischen Qualitätskriterium bewertet wird.

9. Steuerungsverfahren für die Bewegung eines Werkzeugs mit einer Werkzeugmaschine nach Anspruch 8, **dadurch gekennzeichnet, dass** die nach dem geometrischen Qualitätskriterium ausgewählten Einzelbahnen eine Vorzugsrichtung ausweisen.

10. Steuerungsverfahren für die Bewegung eines Werkzeugs mit einer Werkzeugmaschine nach Anspruch 9, **dadurch gekennzeichnet, dass** die Bahn nach den Vorzugsrichtungen der Einzelbahnen ausgewählt wird.

11. Steuerungsvorrichtung für die Bewegung eines Werkzeugs mit einer Werkzeugmaschine zur Erzeugung einer beliebigen Sollfläche durch Bearbeiten umfassend einer numerisch gesteuerten Werkzeugmaschine, wobei das numerische Bahnprogramm, welches die Bearbeitung des Werkstücks mit dem Werkzeug in den Bearbeitungspunkten beschreibt, zur Steuerung der Werkzeugmaschine durch eine Steuervorrichtung erzeugbar ist, und wobei die Bahn aus mehreren Stützpunkten und Einzelbahnen besteht und jede Einzelbahn ein Paar der Stützpunkte miteinander verbindet und die Steuerung der Werkzeugmaschine entsprechend der erzeugten Bahn erfolgt,
**dadurch gekennzeichnet, dass** das Bahnprogramm zur Steuerung der Werkzeugmaschine anhand eines geometrischen Qualitätskriteriums bewertbar und auswählbar ist, und wobei das geometrische Qualitätskriterium zumindest als ein Kriterium die Stetigkeit umfasst, so dass das Bahnprogramm die Bahn in Bezug auf die geometrische Beschaffenheit der Oberfläche des zu bearbeitenden Werkstücks erzeugbar ist.

12. Steuerungsvorrichtung für die Bewegung eines Werkzeugs mit einer Werkzeugmaschine nach Anspruch 11, **dadurch gekennzeichnet, dass** mehrere Bahnprogramme zu einer vorgegebenen Sollfläche erzeugbar sind und hinsichtlich des geometrischen Qualitätskriteriums bewertbar und auswählbar sind.

13. Steuerungsvorrichtung für die Bewegung eines Werkzeugs mit einer Werkzeugmaschine nach Anspruch 11 oder 12, **dadurch gekennzeichnet, dass** das geometrische Qualitätskriterium als zusätzliches Kriterium zudem die Tangentenstetigkeit (G1-Stetigkeit) umfasst.

14. Steuerungsvorrichtung für die Bewegung eines Werkzeugs mit einer Werkzeugmaschine nach Anspruch 13, **dadurch gekennzeichnet, dass** das geometrische Qualitätskriterium als zusätzliches Kriterium zudem die Krümmungsstetigkeit (G2-Stetigkeit) umfasst.

15. Steuerungsvorrichtung für die Bewegung eines Werkzeugs mit einer Werkzeugmaschine nach Anspruch 13, **dadurch gekennzeichnet, dass** das geometrische Qualitätskriterium sowohl das Kriterium der die Krümmungsstetigkeit als auch das Kriterium der Tangentenstetigkeit umfasst, wobei durch ein Kombinationstool das Bahnprogramm zur Steuerung der Werkzeugmaschine anhand eine geeigneten Kombination aus diesen Kriterien berechenbar, bewertbar und auswählbar ist.

16. Steuerungsvorrichtung für die Bewegung eines Werkzeugs mit einer Werkzeugmaschine nach einem der Ansprüche 11-15, **dadurch gekennzeichnet, dass** das geometrische Qualitätskriterium zusätzlich als Kriterium noch die Charakteristika der Werkzeugmaschine umfasst.

17. Steuerungsvorrichtung für die Bewegung eines Werkzeugs mit einer Werkzeugmaschine nach Anspruch 14 und Anspruch 16, **dadurch gekennzeichnet, dass** das geometrische Qualitätskriterium sowohl das Kriterium der die Krümmungsstetigkeit und das Kriterium der Tangentenstetigkeit als auch das Kriterium der Charakteristika umfasst, wobei durch ein Kombinationstool das Bahnprogramm zur Steuerung der Werkzeugmaschine anhand einer geeigneten Kombination aus diesen Kriterien berechenbar, bewertbar und auswählbar ist.

18. Steuerungsvorrichtung für die Bewegung eines Werkzeugs mit einer Werkzeugmaschine nach einem der Ansprüche 11-17, **dadurch gekennzeichnet, dass** die Bahn verschiedene Einzelbahnen umfasst und jede Einzelbahn nach dem geometrischen Qualitätskriterium bewertbar und auswählbar ist und die nach dem geometrischen Qualitätskriterium ausgewählten Einzelbahnen eine Vorzugsrichtung ausweisen.

19. Steuerungsvorrichtung für die Bewegung eines Werkzeugs mit einer Werkzeugmaschine nach einem der Ansprüche 11-18, **dadurch gekennzeichnet, dass** die Werkzeugmaschine eine zerspanende Werkzeugmaschine ist.

FIG 1

FIG 2

# FIG 3

# FIG 4

# FIG 5

FIG 6

FIG 7

FIG 8

Europäisches Patentamt
European Patent Office
Office européen des brevets

**EUROPÄISCHER RECHERCHENBERICHT**

Nummer der Anmeldung

EP 15 18 2171

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 601 23 379 T2 (HITACHI LTD [JP]; HITACHI SOFTWARE ENG [JP]) 11. Januar 2007 (2007-01-11) * Absätze [0001] - [0085], [0098] - [0106] * ----- | 1-10,15, 17,19 | INV. G05B19/4093 |
| X | JP 2007 200037 A (OKUMA MACHINERY WORKS LTD) 9. August 2007 (2007-08-09) | 1-4,8, 11-14,19 | |
| Y | * Absätze [0011] - [0038] * ----- | 6,9,16, 18 | |
| Y | DE 10 2013 112232 B3 (OPEN MIND TECHNOLOGIES AG [DE]) 5. März 2015 (2015-03-05) * Absätze [0001] - [0025], [0051] - [0075] * ----- | 6,9,16, 18 | |
| A | QING ZHEN BI ET AL: "An analytical curvature-continuous Bézier transition algorithm for high-speed machining of a linear tool path", INTERNATIONAL JOURNAL OF MACHINE TOOLS AND MANUFACTURE, ELSEVIER, US, Bd. 57, 16. Januar 2012 (2012-01-16), Seiten 55-65, XP028519071, ISSN: 0890-6955, DOI: 10.1016/J.IJMACHTOOLS.2012.01.008 [gefunden am 2012-02-08] * Seite 55, rechte Spalte, Absatz 2-4 * * Sections 2-4 * ----- | 1-4,6, 11-14,16 | RECHERCHIERTE SACHGEBIETE (IPC) G05B |

Der vorliegende Recherchenbericht wurde für alle Patentansprüche erstellt

| Recherchenort | Abschlußdatum der Recherche | Prüfer |
|---|---|---|
| Den Haag | 9. März 2016 | Prokopiou, Platon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 2171

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-03-2016

| Im Recherchenbericht angeführtes Patentdokument | Datum der Veröffentlichung | Mitglied(er) der Patentfamilie | Datum der Veröffentlichung |
|---|---|---|---|
| DE 60123379 T2 | 11-01-2007 | DE 60123379 T2<br>EP 1235126 A1 | 11-01-2007<br>28-08-2002 |
| JP 2007200037 A | 09-08-2007 | JP 4571592 B2<br>JP 2007200037 A | 27-10-2010<br>09-08-2007 |
| DE 102013112232 B3 | 05-03-2015 | DE 102013112232 B3<br>WO 2015067370 A1 | 05-03-2015<br>14-05-2015 |

EPO FORM P0461

Für nähere Einzelheiten zu diesem Anhang : siehe Amtsblatt des Europäischen Patentamts, Nr.12/82